# EUROPEAN PATENT APPLICATION

(11) **EP 3 081 083 A1**
(43) Date of publication of application: **19.10.2016**
(21) Application number: 16162815.1
(22) Date of filing: 30.03.2016
(51) Int. Cl.: A01K 91/20, A01K 89/00

(54) **A CASTING DISTANCE RECORDER**

(30) Priority: 10.04.2015 GB 201506107; 19.01.2016 GB 201600995
(71) Applicant: Brooks, Gary Edward, Hornchurch, Essex RM11 1DN (GB); Brooks, John Anthony, Hertfordshire WD6 5AD (GB)
(72) Inventor: Brooks, Gary Edward, Hornchurch, Essex RM11 1DN (GB); Brooks, John Anthony, Hertfordshire WD6 5AD (GB)
(74) Representative: Dolleymores

(57) **Abstract**

A casting distance recorder (1) for measuring a length of fishing line (16), the recorder comprising a reel (2) for receiving a length of fishing line, means (7) for rotating the reel and a counter (3) arranged to be incremented upon rotation of the reel, so that the reading on the counter is related to the length of line wound on the reel, wherein the reel has a surface on which the line is to be wound and said surface has an aperture, cut, slot (14), opening, or doors therein, through which a weight on the end of the fishing line may be placed into a cavity within the reel such that the line may be wound against an outer surface of the reel unimpeded by the weight.

## Description

The present invention relates to a casting distance recorder for use as a fishing aid and a method of using same.

When fishing, particularly fresh water fishing, an angler will often find a "hot spot" in a particular swim and will wish to make subsequent casts to this same hot spot. Although it is relatively easy to cast fairly accurately in the direction of a desired hot spot, it is more difficult to accurately cast to the right distance to reach the hot spot. This is particularly the case where the hot spot may, as is often the case, lie adjacent a bank opposite to the position of the angler, where any overcasting is likely to result in a fishing line and hook snagging on the opposite bank.

To reach a desired hot spot, a standard method is to initially cast short of the hot spot, pay out an additional length of line approximately equal to the distance between the hot spot and the point of the last cast, lock the line to the reel, wind the line in and recast further, whereby the line will be paid out until the point where it is locked to the reel and this should cause the line and the weight on the end of the line to drop into the water in the region of the hot spot.

Two problems with the above method are that multiple casts may disturb the fish and, if a fish should strike, it is then necessary to release the line from the fishing reel to allow the fish to at least initially run with the line, requiring that the process be repeated in order to return to the hot spot.

To address the above problems, it is already known to clip the line to the fishing reel (or mark the line in some way) and reel the line onto the fishing reel directly from the hot spot. Two sticks, or similar items specifically marketed for this purpose, can then be placed in the ground several meters apart and the line unreeled from the fishing rod around the sticks until the point where the line is clipped to the fishing reel (or the marker is reached). The number of lengths of line wrapped around the two sticks can then be counted and an end point marked. The line can then subsequently be wound back on the reel and recast to the hot spot, but now if the line has to be released from the fishing reel (or the marker on the line is lost), this can subsequently be reset by wrapping the line again around the two sticks.

Although the above method works, it can be problematic on a busy bank, for example when competition fishing and particularly when night fishing, where this may disturb other people fishing or other fishing people camped near by. It also takes up a significant amount of time, particularly at night, which may be undesirable in a fishing competition. Also in wet weather it requires an angler to leave the shelter of their bivvy or the like.

According to the present invention there is provided a casting distance recorder for measuring a length of fishing line, the recorder comprising a reel for receiving a length of fishing line, means for rotating the reel and a counter arranged to be incremented upon rotation of the reel, so that the reading on the counter is related to the length of line wound on the reel, wherein the reel has a surface on which the line is to be wound and said surface has an aperture, cut, slot, opening, or doors therein, through which a weight on the end of the fishing line may be placed into a cavity within the reel such that the line may be wound against an outer surface of the reel unimpeded by the weight.

With a casting distance recorder in accordance with the present invention, once a desired hot spot has been identified and cast to, the angler may lock the line to the fishing reel (or mark the line) as previously, reel in the line and attach the end of the line (or the weight at or towards the end of the line) to the reel of the distance recorder and wind the line onto the distance recorder reel until the lock point (or marker) is reached, whereby the counter on the distance recorder can be read. All this may be done with the rod lying on the ground or stood next to the counter.

The value indicated by the counter of the casting distance recorder is related to the quantity of line wound onto the reel of the casting distance recorder and thus to the length of line dispensed in the previous cast to the hot spot. As with the two sticks method, this can then be used to subsequently determine an identical length of line and to then lock the line to a fishing real (or mark the line) to ensure subsequent casts fall at the appropriate distance to fall in the desired hot spot.

The casting distance recorder may be used with one line, to ensure a line is subsequently locked to a fishing real in the same position (or correctly marked) should the lock point with the fishing reel (or marker on the line) be subsequently lost. It also enables multiple rods and lines to be used which can be cast into the same hot spot, even at night where the exact position of the hot spot may be difficult to determine.

In addition to the above, unlike the two stick method, a note may be made of the swim, the reading on the casting distance recorder recorded and the direction of a cast towards a hot spot recorded (for example by a compass bearing or by reference some landmark, for example: "10 meters to the right of the telegraph pole on the far bank"). With this data, an angler may keep a record for swims visited to enable them, on revisiting a swim, to again find the same hot spot, without any additional casting and associated disturbance of fish at the hotspot. The invention may also be used to assist in baiting of a hot spot.

It should be appreciated that the reading on the counter can be a completely arbitrary reading, not related in anyway to any particular unit of length. Also it is irrelevant as to whether the line is measured, for example, from the last eyelet on a rod or whether the line is taken directly off the fishing reel and measured directly from the fishing reel, provided that the same method is employed when obtaining the counter reading as when using the counter reading to set the marker or to fix a line to the fishing reel.

An advantage of the reel of the distance recorder being arranged to receive a weight attached to the end of the fishing line, such that the line may be wound unimpeded against an outer surface of the reel, is that it provides reliable results relative to an arrangement where the weight is positioned outside the surface of the reel, such that the line may or may not be wound over the weight, which will alter the counter reading for a given length of the line received by the reel.

Having a cavity in the reel to accommodate the weight and any other end tackle is also advantageous, for it locates the end tackle in the centre of reel, so that the reel remains substantially balanced, making it easier to wind the line onto the reel. The reel may have a central portion which defines the surface on which the line is to be wound, which central portion is made of a relatively flexible foam or rubber type material with the aperture, cut, slot or opening therein, the dimensions of which are selected such that the aperture, cut or slot, will normally have to be widened against the resilience of the material in order for a fishing weight to pass there through. This may be particularly advantageous for it provides a convenient way of attaching the line to the reel, by simply pressing the weight into the reel and then subsequently pulling the weight out of the reel. Alternatively the weight and any end tackle may be inserted through one or more doors in the surface of the reel over which the line is subsequently wound. With any of these arrangements, if the line extends past the weight to a hook, typically 10 to 40 cm beyond the point at which the weight is attached to the end of the line, it is advantageous to use the weight as the end of the line and not the hook, because the position of the cast is determined by the position at which the weight lands in the water. Here any additional line between the weight and hook may be wound onto the reel, as the line between the weight and the fishing reel is wound onto the reel.

Where the central portion of the reel has one or more doors, the cavity may be at least partially filled with a compressible material arranged to be compressed by the weight being sandwiched between the compressible material and the one or more doors when the one or more doors are closed. This may act to retain the weight and thus the line on the reel.

Preferably, the reel comprises at least a portion formed out of a foam or rubber type material into which a fishing hook on the line may be inserted in order to maintain the hook in place when the fishing line is wound onto the reel. This enables the hook to be secured to the reel to prevent it getting tangled with the line subsequently wound onto the reel of the casting distance recorder.

Because fishing line is relatively thin, multiple layers of line wound on the reel will not significantly increase the diameter of the reel and thus the length of line wound on the real for each revolution of the real may remain fairly constant. The counter may then be connected to the reel and calibrated, such that each unit on the counter corresponds to a recognised unit of length, for example 10 cm, of the line when wound onto the reel. In this way, where it is desired to make a subsequent cast, for example 1 meter further out than for a previous cast, then the line may be wound onto the reel for an extra ten units, corresponding to the additional meter required.

The reel may be rotated manually, directly by hand or by means of a small spindle extending from one side of the reel. Alternatively it may comprise a handle arranged to be turned manually, with the casting distance recorder further comprising a drive mechanism connecting the handle to the reel, such that one rotation of the handle causes more than one rotation of the reel. This enables the line to be quickly wound onto the reel of the casting distance recorder. In an alternative embodiment, the means for rotating the reel may be an electric motor.

Whether manually or electrically driven, the casting distance recorder may be arranged to provide an audible or visible warning when the counter reaches a predetermined value. Alternatively, or addition, it may comprise a brake to break or lock the reel when the counter reaches a predetermined value. The casting distance recorder may additionally comprise means for entering a predetermined value and preferably means for entering more than one predetermined value, so that multiple values may be entered and stored corresponding to different casting distances.

According to a second embodiment of the present invention there is provided a method of fishing comprising casting out to a desired position, marking the line or locking the line to a fishing reel, winding in the line, attaching a weight at the end of the line to a casting distance recorder, as described above, resetting the counter, winding the line of the fishing reel on to the casting distance recorder until the marker is at a predetermined position, or until the point at which the line is locked to the fishing reel, noting the reading on the counter of the casting distance recorder, removing the line from the casting distance recorder, subsequently attaching the same or a different line to the casting distance recorder, winding the line onto the casting distance recorder until the noted reading is reached, marking the line at a predetermined position, or locking the line to a fishing reel, winding the line on to a fishing reel and casting out to a point where the marker is at a predetermined position or the fishing line is restrained by being attached to the reel.

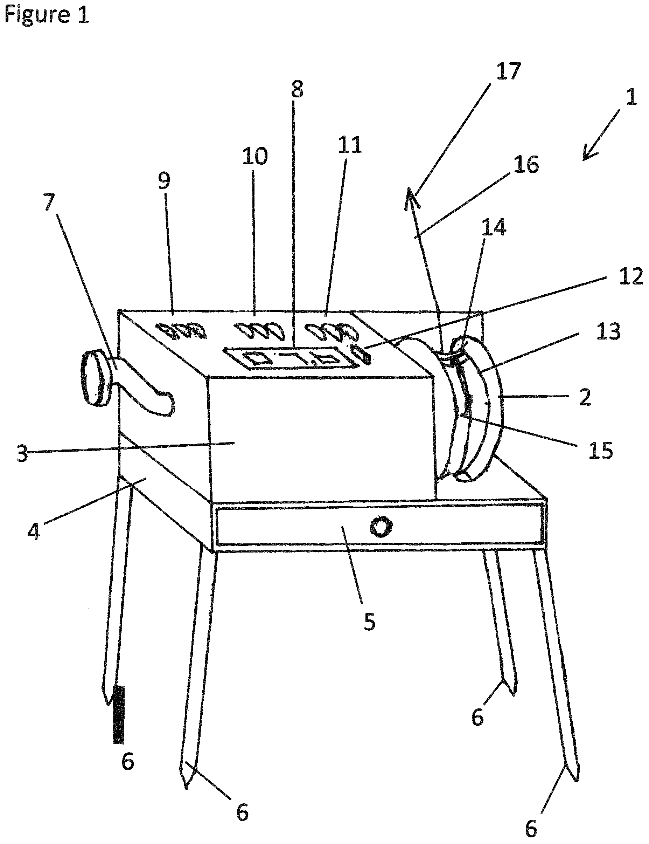

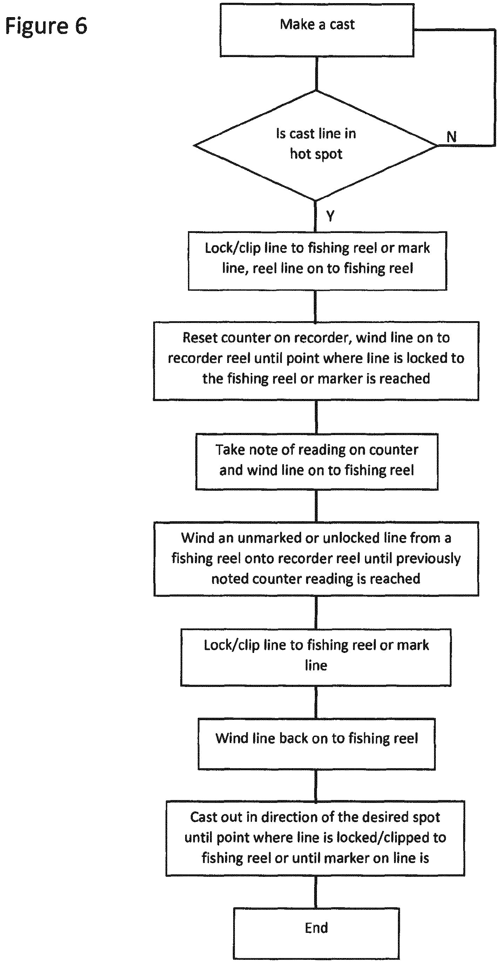

The invention will now be described by way of example only, with reference to Figures 1 and 6 in which like numerals are used to indicate like parts and of which:
Figure 1 illustrates a first embodiment casting distance recorder in accordance with the present invention;
Figure 2A is a front view of a second embodiment of a casting distance recorder in accordance with the present invention, with doors on the reel in an open position;
Figure 2B is a plan view of a casting distance recorder of Figure 2A;
Figure 2C is a side elevation of the casting distance recorder of Figures 2A and 2B;
Figure 2D is a perspective view of the casting distance recorder of Figures 2A to 2C;
Figures 3A to 3D correspond to Figures 2A to 2D but with the casing removed from the casting distance recorder;
Figures 4A to 4D and Figures 5A to 5D correspond to Figures 3A to 3D and 4A to 4D respectively, but with the doors closed;
Figure 6 is a flow diagram representative of the steps of a method of fishing using a casting distance recorder in accordance with the present invention.

Referring to Figure 1, a casting distance recorder, indicated generally as 1, has a reel 2 attached by a spindle (not shown) to a counter 3 mounted to a frame 4 having a drawer 5 and legs 6.

In the embodiment shown in Figure 1, the reel 2 is manually rotated by handle 7 which is geared within the counter 3, such that one rotation of the handle 7 produces multiple rotations of the reel 2. On top the counter 3 is a display 8 of the counter 3 and three sets of dials 9, 10 and 11 in which three sets of predetermined values may be input to the counter 3. Also on top of the counter 3 is a reset button 12. The reel 2 comprises a central portion 13 of foam which extends almost entirely around the central portion of the reel to leave a slot 14, providing access into a central cavity of the reel 2.

In use, (with reference to the flow cart of Figure 6), an angler makes one or more casts until they locate a desired spot, which they considers to be a "hot spot", to which they wishes to make subsequent casts. Once they have made a cast to the hot spot, possibly by gradually increasing the length of successive casts, they lock the line to the fishing reel on their rod, or mark the line, prior to reeling the line onto the fishing reel.

The rod and fishing reel are then taken to the casting distance recorder 1 of Figure 1, where the reset button 12 is depressed to reset the counter 3. The weight on the end of the line of the fishing rod can then be pushed through slot 14 into the reel 2, against the resilience of the foam 13, thus attaching the end of the line 16, or effectively the end of the line, to the reel 2. A hook 15, attached to the weight, may be clipped for safely into the foam 13, as shown in Figure 1.

The line 16, which extends to the rod and fishing reel, as represented by the arrow 17, is then wound onto the reel 2 of the casting distance recorder 1, until the point is reached where the line is locked to the fishing reel, or where the marker is reached, at which point the reading on the display 8 is noted. The line may then be wound off the reel 2 of the casting distance recorder 1, back onto the rod and fishing reel.

When it is desired to cast with a different rod, or the same rod after the marker has been removed or the lock point to the fishing reel has been released, then the counter 3 is reset by reset button 12. A weight at the end of the fishing line is then inserted into slot 14 of the reel 2 and the handle 7 turned until the display 8 reaches the same reading as previously. Alternatively, one of the sets of dials 9, 10 or 11 may be preset to a counter reading previously recorded (perhaps on a previous occasion) whereby the handle 7 is turned until an audible warning is provided and the reel and handle are braked and locked when the counter reaches that predetermined reading. At this point the line 16 may be locked to the fishing reel or marked and wound back off the reel of the recorder 2 onto the fishing reel, to ensure a subsequent cast can be made to the desired distance by casting until the marker is reached or the line reaches the point where it is locked to the fishing real.

The readout 8 is calibrated such that it corresponds in meters to the length of line wound onto the reel 2. Thus if it is desired to increase the cast by 5 metres then an additional 5 metres may be wound onto the reel 2 of the recorder 1 before the reading on the display 8 is read.

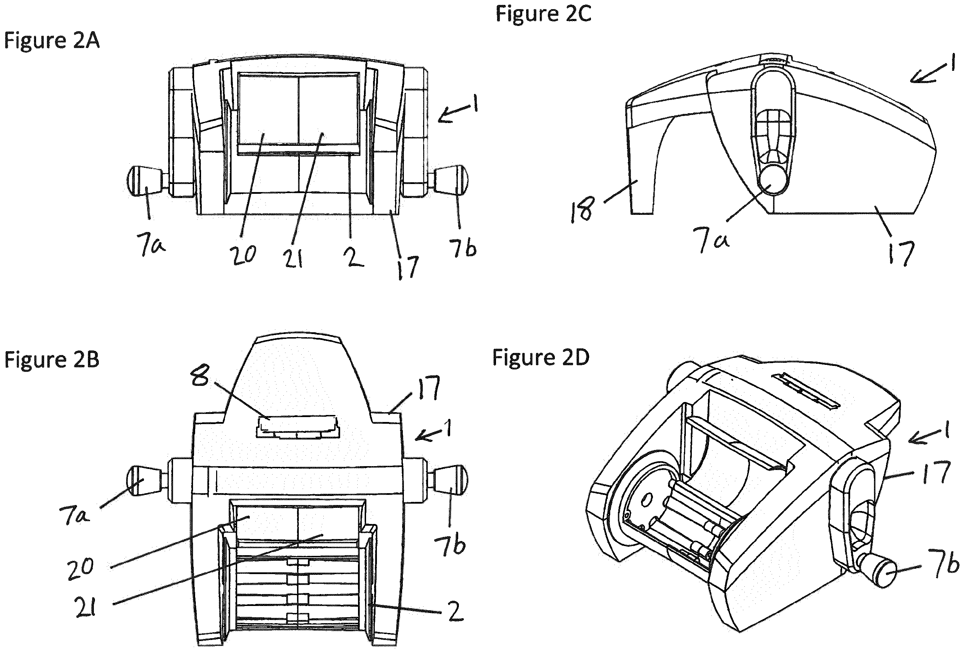

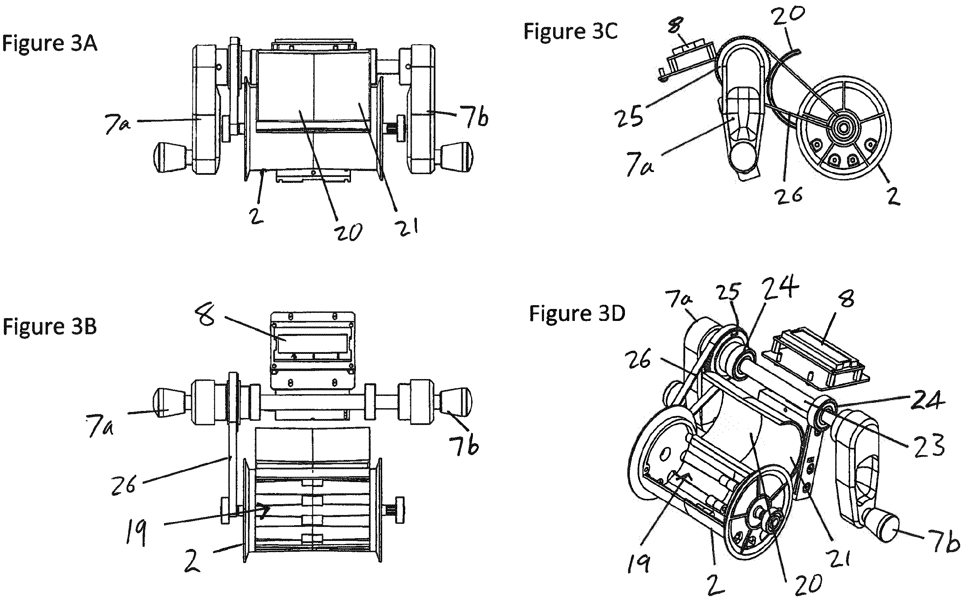

Referring to Figure 2A to 2D there is illustrated various views of a second embodiment of a distance recorder in accordance with the present invention. This comprises a casing 17 which is shown removed in corresponding Figures 3A to 3D, to show the internal components of the distance recorder 1.

As seen for example in Figure 2C, the casing 17 comprises a grip 18 by which the distance recorder 1 can be hand held, strapped to a stake or mounted on a spike using an aperture in the bottom of the grip 18 (not shown).

As seen for example in Figure 2B, the reel 2 in this embodiment is centrally mounted, so that when the distance recorder 1 is held by the grip 18 and a fishing line (not shown) is wound onto the reel 2, the distance recorder 1 will tend to follow the line and assist in winding the line evenly on the reel 2.

Two handles 7a and 7b are mounted on either side of the distance recorder 1, so that when hand held by grip 18 a respective one may be operated by either a left handed or right handed user. Alternatively, when the distance recorder 1 is placed on the ground, mounted to a stake, mounted on a spike or similar, both handles 7a and 7b can be operated together, if desired.

The reel 2 has an inner cavity 19 and two doors 20 and 21 hinged to the main body of the reel 2 by hinge 22. Although not shown, the cavity 19 may have within it a compressible foam material into which, in use, a weight on the end of a fishing line may be placed and depressed by the action of closing doors 20 and 21. The closing of the doors 20 and 21 will then sandwich the weight and thus hold the associated line in place for subsequent winding onto the reel 2. The doors 20, 21 are arranged to latch to the main body of the reel 2 and the latch is arranged to be released to permit doors 20, 21 to be opened by distorting the main body 2, pressing it inwards in a central portion of the its surface, in order to open the doors 20, 21 and release the weight and line.

The foam within the cavity 19 is optional, to prevent the weight and any other end tackle placed within the reel rattling around within the reel or becoming entangled with itself.

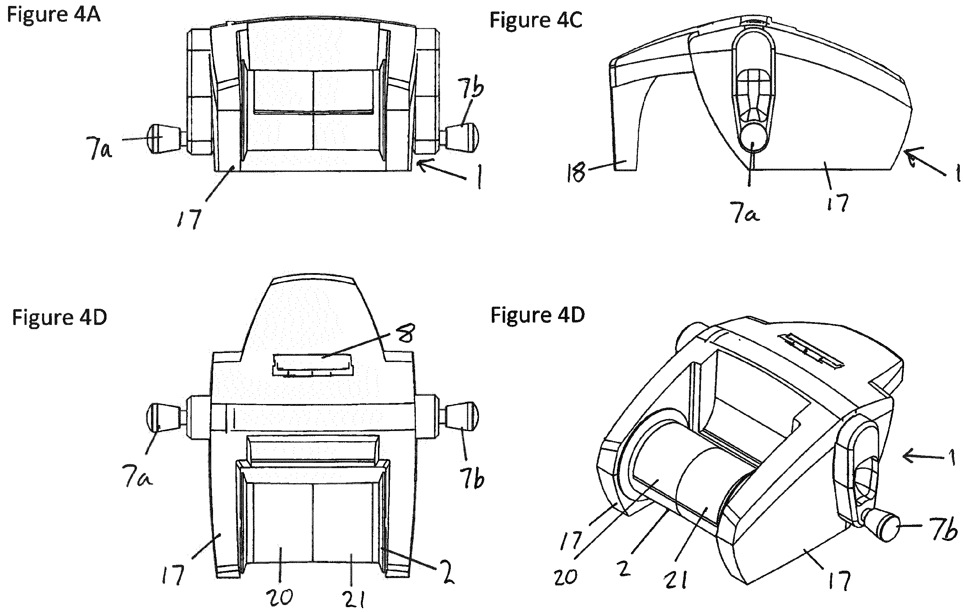

The doors 20 and 21 are shown open in each of Figures 2A to 3D, but corresponding Figures 4A to 5D show the doors 20 and 21 in a latched closed position where, the line may be wound evenly on the outer surface of the reel 2 with the weight and any other end tackle conveniently stored within the cavity 19 of the reel 2.

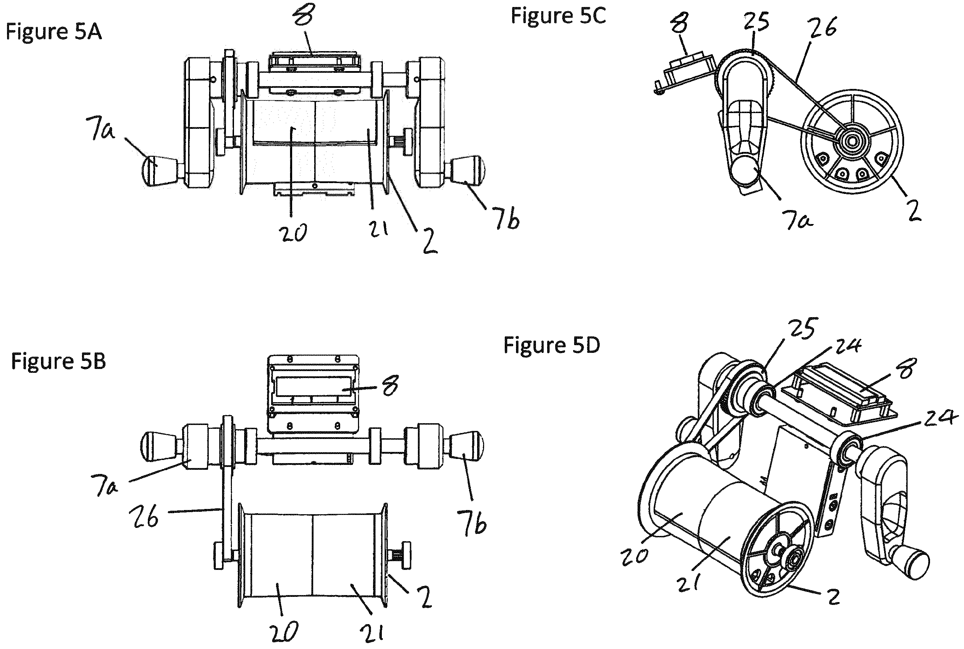

As is most clearly foreseen from Figures 3A to 3D or Figures 5A to 5D, the handles 7a and 7b turn a spindle 23 mounted in bearings 24, to which spindle 23 a cog 25 is attached. The cog 25 drives belt 26 which drives a similar cog (not shown) mounted on the reel and this drives the reel 2.

The display 8 and associated circuitry monitors rotation of spindle 23 and thus of the reel 2 and may comprise a touch screen or buttons associated with it, so that it can be operated in the same manner as in the Figure 1 embodiment.

Two examples of the present invention have been described by way of example only with reference to the accompanying figures. However, it will be appreciated that many modifications will appear to those skilled in the art which fall within the scope of the appended claims.

## Claims

1. A casting distance recorder for measuring a length of fishing line, the recorder comprising a reel for receiving a length of fishing line, means for rotating the reel and a counter arranged to be incremented upon rotation of the reel, so that the reading on the counter is related to the length of line wound on the reel, wherein the reel has a surface on which the line is to be wound and said surface has an aperture, cut, slot, opening, or doors therein, through which a weight on the end of the fishing line may be placed into a cavity within the reel, such that the line may be wound against an outer surface of the reel unimpeded by the weight.

2. A casting distance recorder as claimed in Claim 1, wherein the reel has a central portion which defines the surface on which the line is to be wound, which central portion is made of a relatively flexible foam or rubber type material with an aperture, cut, slot or opening therein, the dimensions of which are selected such that the aperture, cut slot or opening will normally have to be widened against the resilience of the material in order for a fishing weight to pass there through into the cavity within the reel, or the central portion has one or more doors which must be opened in order for a fishing weight to pass there through into the cavity within the reel.

3. A casting distance recorder as claimed in Claim 2 wherein the central portion has one or more doors and the cavity is at least partially filled with a compressible material arranged to be compressed by the weight sandwiched between the compressible material and the one or more doors, when the one or more doors are closed.

4. A casting distance recorder as claimed in Claim 3 wherein the one or more doors are arranged to be fastened closed to retain the weight in place.

5. A casting distance recorder as claimed in Claim 4 further comprising a latch to retain the doors closed wherein the latch is arranged to be released to open the one or more doors by distorting the outer surface of the central portion of the reel.

6. A casting distance recorder as claimed in any preceding claim wherein the reel is centrally mounted within a casing of the casting distance recorder.

7. A casting distance recorder as claimed in any preceding claim, wherein the reel is arranged to be attached to a fishing line by receiving and retaining the weight attached to the fishing line in the cavity in the reel.

8. A casting distance recorder as claimed in any preceding claim, wherein the reel comprises at least a portion formed out of a foam or rubber type material, into which a fishing hook may be inserted, in order to maintain the hook in place when the fishing line is wound on to the reel.

9. A casting distance recorder as claimed in any preceding claim, wherein the counter is connected to the reel and calibrated such that each unit on the counter corresponds to a recognised unit of length of line when the line is wound against a surface of the reel.

10. A casting distance recorder as claimed in any preceding claim, wherein the means for rotating the reel is an electric motor.

11. A casting distance recorder as claimed in any preceding claim, arranged to provide an audible or visible warning when the counter reaches a predetermined value or to brake or lock the real when the counter reaches a predetermined value.

12. A casting distance recorder as claimed in Claim 11, comprising means for entering the predetermined value.

13. A casting distance recorder as claimed in Claim 11, comprising means for entering more than one predetermined value, so that multiple values may be entered corresponding to desired casting distances.

14. A method of fishing comprising casting out to a desired position, marking the line or locking the line to a fishing reel, winding in the line, attaching a weight at the end of the line to a casting distance recorder as claimed in any preceding claim, resetting the counter, winding the line of the fishing reel on to the casting distance recorder until the marker is at a predetermined position or until the point at which the line is locked to the fishing reel, noting the reading on the counter of the casting distance recorder, removing the line from the casting distance recorder, subsequently attaching the same or a different line to the casting distance recorder, winding the line onto the casting distance recorder until the noted reading is reached, marking the line at a predetermined position, or locking the line at that point to a fishing reel, winding the line on to a fishing reel and casting out to a point where the marker is at a predetermined position or the fishing line reaches the point where it is attached to the reel.

15. A method as claimed in Claim 14 wherein the line is attached to the reel by pushing a weight attached to the line into a cavity within the reel.
